Europäisches Patentamt

European Patent Office

Office européen des brevets

(11) Veröffentlichungsnummer: **0 355 452**
**A1**

## (12) EUROPÄISCHE PATENTANMELDUNG

(21) Anmeldenummer: 89113779.6

(51) Int. Cl.⁴ **C23G 1/08** , **C02F 9/00**

(22) Anmeldetag: 26.07.89

(30) Priorität: 29.07.88 DE 3825857

(43) Veröffentlichungstag der Anmeldung:
28.02.90 Patentblatt 90/09

(84) Benannte Vertragsstaaten:
BE CH DE FR GB LI NL

(71) Anmelder: Kernforschungsanlage Jülich GmbH
Wilhelm-Jonen-Strasse
D-5170 Jülich(DE)

(72) Erfinder: Lukoschek, Werner
Neumühle 13
D-5140 Erkelenz(DE)
Erfinder: Niessen, Maria-Elisabeth
Kofferner Strasse 14
D-5172 Linnich(DE)
Erfinder: Schlenter, Wolfgang
Kleierde 43
D-5166 Kreuzau(DE)
Erfinder: Sandek, Gustav
Otbertstrasse 15
D-5132 Übach-Palenberg(DE)
Erfinder: Zange, Egon, Dr.
Friedrich-Ebert-Platz 22-24
D-5160 Düren(DE)

(54) Beizsäure für Edelstahl und Verfahren zur Aufarbeitung von verbrauchter Beizsäure.

(57) Zum Beizen von austenitischen Stählen eignet sich eine Flußsäure/Salpetersäure-Mischung mit 5 bis 12 %, vorzugsweise 6 bis 10 % Flußsäure und 1 bis 5 %, vorzugsweise 2 bis 4 % Salpetersäure. Verbrauchte Beizsäure mit einem auf ca. 35 bis 60 g Eisen pro Liter kontrollierten Eisengehalt und einem Stoffmengenverhältnis n (Fluorid)/n (Eisen) von 4 bis 6, insbesondere 4,4 bis 5,5 wird zur Aufarbeitung mit Alkali auf pH 4 bis 6, insbesondere 4,5 bis 5,5 eingestellt, unter Bildung eines kristallinen Niederschlages ($\geq$ 98 % des Fluorids). Die erhaltene Suspension kann als solche zur Trockne eingeengt werden, vorzugsweise wird jedoch der Niederschlag von der Flüssigkeit getrennt und als Sonderabfall beseitigt. Die Flüssigkeit kann ohne Korrosionsgefahr in gewöhnlichen Verdampfern aufkonzentriert, getrocknet und als Trockengut (Sonderabfall) schadlos beseitigt werden. Für die Einstellung des pH-Wertes wird insbesondere Natronlauge verwendet. Die Beizsäure eignet sich besonders zum Abbeizen radioaktiv kontaminierter Stähle.

EP 0 355 452 A1

## Beizsäure für Edelstahl und Verfahren zur Aufarbeitung von verbrauchter Beizsäure

Die Erfindung bezieht sich auf eine Beizsäure aus einer Mischung von Flußsäure und Salpetersäure zum Beizen von austenitischen Stählen sowie auf die Aufarbeitung von verbrauchter Beizsäure.

Edelstähle werden üblicherweise mit einer Beizsäure, die aus einer Mischung von Salpeter-und Flußsäure besteht, gebeizt. Als ein Optimum wird eine Zusammensetzung von ca. 15 % Salpetersäure und 2 % Flußsäure angegeben. (A. Krepler, Totale Regeneration der verbrauchten Beizsäure für rostfreie Stähle, Schriftenreihe über Entwicklungen und Verfahren der Ruthner Industrieanlagen AG, Heft Nr. 3).

Die verbrauchte Beizsäure, die neben freier Salpeter- und Flußsäure bis zu etwa 40 g Eisen pro Liter sowie die Legierungsbestandteile wie Chrom und Nickel in entsprechender Konzentration enthält, gilt als starkes Umweltgift. Sie muß daher rezykliert oder, wenn die Verwertung nicht möglich oder wirtschaftlich nicht vertretbar ist, schadlos beseitigt werden.

Für die Rezyklierung sind verschiedene Verfahren bekannt, die im wesentlichen auf dem Eindampfen der Säure, der erneuten Verwertung des Destillats und der thermischen Spaltung des hauptsächlich aus Metallnitrat und -fluorid bestehenden Rückstands aufbauen. Diese Verfahren sind sehr aufwendig. Die Anlagenteile sind starker Korrosion unterworfen.

Ferner können häufig spezielle Beizsäuren nach diesen Verfahren nicht oder nicht mit wirtschaftlich vertretbarem Aufwand rezykliert werden. Dies gilt z.B. für radioaktiv kontaminierte verbrauchte Beizsäuren.

Aufgabe der Erfindung ist es daher, eine Rezeptur für eine Beizsäure zu entwickeln, die der üblicherweise eingesetzten Beizsäure hinsichtlich der Reinigungswirkung nicht nachsteht, jedoch nach einer einfachen Vorbehandlung ihre Korrosivität verliert, so daß sie ohne Schwierigkeiten weiterverarbeitet und schadlos beseitigt oder ggf. auch verwertet werden kann. Dabei soll im Falle der schadlosen Beseitigung möglichst wenig Sekundärabfall entstehen.

Die zu diesem Zweck entwickelte erfindungsgemäße Beizsäure der eingangs genannten Art ist dadurch gekennzeichnet, daß die Konzentrationen der Flußsäure 5 bis 12 %, vorzugsweise 6 bis 10 %, und der Salpetersäure 1 bis 5 %, vorzugsweise 2 bis 4 % betragen.

Entgegen der bisherigen Auffassung, wonach das Optimum einer Beizsäure bei 12 bis 15 % Salpetersäure und einigen Prozent Flußsäure liegt, konnte überraschenderweise festgestellt werden, daß eine Mischung von 5 bis 12 % Flußsäure und 2 bis 4 % Salpetersäure der üblichen Säure in ihrer Wirksamkeit nicht nachsteht. Dies wird aus der nachfolgenden Tabelle deutlich, in der die Auflösungsraten verschiedener Säuremischungen bezogen auf einen austenitischen Stahl mit ca. 18 % Chrom und 8 % Ni zusammengestellt sind.

### Tabelle

| Abtrag austenitischen Stahls in mg/cm² in Abhängigkeit von der Beizzeit in Stunden | | | | | |
|---|---|---|---|---|---|
| Beizsäure Zusammensetzung | Beizzeit (h) | | | | |
| | 3 | 12 | 44 | 90 | 210 |
| 5 % HF + 1 % HNO$_3$ | 9,3 | 22,7 | 42,5 | 83,1 | 106,1 |
| 5 % HF + 3 % HNO$_3$ | 7,0 | 19,9 | 41,3 | 64,2 | 82,4 |
| 5 % HF + 6 % HNO$_3$ | 11,3 | 23,5 | 46,2 | 69,2 | 87,5 |

Wie man sieht, werden mit relativ geringen Salpetersäurekonzentrationen erhebliche Abtragungen erreicht.

Bei der Reaktion werden praktisch keine Stickoxide, sondern überwiegend Wasserstoff entwickelt.

Die Salpetersäure wird daher kaum verbraucht. In der Regel wird die Säure ausgetauscht, wenn ein Eisengehalt von 35 bis 60 g Eisen je Liter erreicht ist.

Die Aufbereitung der verbrauchten Säure erfolgt im wesentlichen durch eine Fluoridfällung mit Alkali.

Für die weitgehende Abtrennung des Fluorids (≧ 98 %) aus der verbrauchten Beizsäure durch Alkalisierung (inbesondere mit Natronlauge) ist es wesentlich, daß das Stoffmengenverhältnis n(F⁻)/n(Fe) zwischen 4 und 6 liegt. Ein Verhältnis von genau 5 liegt z.B. bei folgenden Paarungen vor:

35 g/l Fe und 62,7 g/l HF
60 g/l Fe und 107,5 g/l HF.

Weitere wesentliche Voraussetzung für eine weitgehende Abtrennung des Fluorids ist die Einstellung des pH-Wertes zwischen 4 und 6, insbesondere zwischen 4,5 und 5,5. Über- oder Unterschreitung der Grenzwerte vermindert die Ausfällung des Fluorids merklich, und zwar auf 80 % bei pH = 3 und auf 76 % bei pH = 9. Steigt das Stoffmengenverhältnis n(F⁻)/n(Fe) trotz Einhaltung des genannten pH-Bereiches auf 8 oder darüber, werden nur noch etwa 80 % bzw. etwa 60 % des Fluorids gefällt.

Bei der Neutralisation der freien Säure mit Natronlauge bis zum angegebenen pH-Bereich fällt ein kristalliner, leicht filtrierbarer Niederschlag aus, der überwiegend aus Natriumfluorid und Eisenfluorid besteht. In der überstehenden Lösung sind nur noch etwa 2 % des ursprünglich vorhandenen Fluorids enthalten.

Die Suspension kann als solche zur Trockne eingeengt werden, vorzugsweise wird jedoch der Niederschlag durch Filtration oder durch Dekantieren oder Zentrifugieren der Suspension abgetrennt und in der Regel als Sonderabfall beseitigt. Im Falle radioaktiv kontaminierter Beizlösungen wird der Niederschlag als radioaktiver Abfall nach bekannten Verfahren konditioniert und bis zu einer geordneten untertägigen Beseitigung in besonderen Lägern zwischengelagert. Bei nichtradioaktiven Beizlösungen ist aber auch eine Verwertung des Niederschlags möglich.

Das Filtrat bzw. Dekantat bzw. Zentrifugat kann ohne die Gefahr der Korrosion in gewöhnlichen Verdampfern aufkonzentriert und in einem weiteren Schritt in bekannten Anlagen eingetrocknet werden. Das Trockenprodukt wird als Sonderabfall schadlos beseitigt.

Das beschriebene Verfahren zeichnet sich vor allem durch eine erhebliche Verminderung der Korrosion der Anlagenteile bei der Aufarbeitung der verbrauchten Beizsäure aus, was den Einsatz spezieller, teurer Verfahren zur Aufarbeitung der erschöpften Beizsäure unnötig macht. Es ist daher auch besonders wirtschaftlich.

## Ansprüche

1. Beizsäure aus einer Mischung von Flußsäure und Salpetersäure zum Beizen von austenitischen Stählen,
**dadurch gekennzeichnet,**
daß die Konzentrationen der Flußsäure 5 bis 12 %, vorzugsweise 6 bis 10 %, und der Salpetersäure 1 bis 5 %, vorzugsweise 2 bis 4 %, betragen.

2. Verfahren zum Aufarbeiten von verbrauchter Beizsäure nach Anspruch 1,
**dadurch gekennzeichnet,**
daß verbrauchte Beizsäure mit einem auf ca. 35 bis 60 g Eisen pro Liter kontrollierten Eisengehalt und einem Stoffmengenverhältnis n(Fluorid)/n(Eisen) von 4 bis 6, vorzugsweise 4,4 bis 5,5 mit Alkali auf pH 4 bis 6, vorzugsweise 4,5 bis 5,5, eingestellt wird unter Bildung eines kristallinen Niederschlages, wonach die flüssige Phase ggf. nach Abtrennung des Niederschlages zur Trockne eingeengt wird.

3. Verfahren nach Anspruch 2,
**dadurch gekennzeichnet,**
daß der pH-Wert der Beizsäure mit Natronlauge eingestellt wird.

4. Verfahren nach Anspruch 2 oder 3,
**dadurch gekennzeichnet,**
daß der durch Alkalizusatz ausgefallene kristalline Niederschlag durch Filtrieren, Zentrifugieren oder Dekantieren abgetrennt und als Sonderabfall beseitigt wird.

5. Verfahren nach Anspruch 4,
**dadurch gekennzeichnet,**
daß die verbleibende Flüssigkeit durch Destillation und Trocknung weiterverarbeitet wird.

6. Verfahren zum Abbeizen von insbesondere radioaktiv kontaminiertem Edelstahl mit einer Mischung von Flußsäure und Salpetersäure,
**dadurch gekennzeichnet,**
daß man eine Mischung mit 5 bis 12 % HF und 1 bis 5 % HNO₃ verwendet.

Europäisches
Patentamt

Nummer der Anmeldung

EP 89 11 3779

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | COMPTOS RENDUS ACADEMIES DES SCIENCES, Band 234, Nr. 4, 14. Januar 1952, Seiten 440-442; L. BEAUJARD: "Sur le polissage chimique du fer et de l'acier doux" * Seite 440, Figur 1; Seite 441, Zeilen 4-6 * --- | 1 | C 23 G 1/08 C 02 F 9/00 |
| P,X | PATENT ABSTRACTS OF JAPAN, Band 13, Nr. 29 (C-562)[3377], 23. Januar 1989; & JP-A-63 230 892 (KAWASAKI STEEL CORP.) 27-09-1988 * Zusammenfassung * --- | 1,6 | |
| X | PATENT ABSTRACTS OF JAPAN, Band 11, Nr. 369 (C-461)[2816], 2. Dezember 1987; & JP-A-62 139 888 (KAWASAKI STEEL CORP.) 23-06-1987 * Zusammenfassung * --- | 1 | |
| A | WO-A-8 606 646 (ALLIED CORP.) * Ansprüche 1,7-13 * --- | 2 | RECHERCHIERTE SACHGEBIETE (Int. Cl.5) |
| A | BE-A- 840 982 (RUTHNER INDUSTRIEANLAGEN-AG) ----- | | C 23 G 1/00 C 02 F 9/00 |

Der vorliegende Recherchenbericht wurde für alle Patentansprüche erstellt

| Recherchenort | Abschlußdatum der Recherche | Prüfer |
|---|---|---|
| DEN HAAG | 09-11-1989 | TORFS F.M.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument